# FASCICULE DE BREVET EUROPEEN

(11) **EP 2 871 924 B1**
(45) Date de publication et mention de la délivrance du brevet: **03.10.2018**
(21) Numéro de dépôt: 13756556.0
(22) Date de dépôt: 09.07.2013
(51) Int. Cl.: A01D 34/66, A01D 34/86

(54) **MACHINE DE COUPE**
SCHNEIDEMASCHINE
CUTTING MACHINE

(30) Priorité: 12.07.2012 FR 1256707
(43) Date de publication de la demande: 20.05.2015
(73) Titulaire: KUHN S.A., 67700 Saverne (FR)
(72) Inventeur: WOLFF, Michel, 67670 Waltenheim Sur Zorn (FR); SCHWER, Michael, 57370 Bourscheid (FR)
(74) Mandataire: Esch, Esther Evelyne
(86) Numéro de dépôt international: PCT/FR2013/051639
(87) Numéro de publication internationale: WO 2014/009652

(56) Documents cités:
- EP-A1- 1 060 650
- EP-A1- 1 527 669
- EP-A2- 2 248 408
- FR-A1- 2 759 851
- FR-A1- 2 964 007
- NL-C2- 1 033 509

## Description

La présente invention se rapporte à une machine de coupe, notamment de végétaux, avec un châssis comportant un bâti et un support d'attelage conçu pour être monté sur un attelage trois points d'un tracteur, et avec un bras relié directement au bâti par une première articulation et s'étendant, au moins pendant le travail, latéralement par rapport au bâti, le bras portant un organe de travail et pouvant, au moyen d'un dispositif de déplacement, être pivoté par rapport au bâti entre une position de travail, une position de manoeuvre et une position de transport, le dispositif de déplacement comportant une bielle et au moins un premier vérin articulé entre le bâti et la bielle et un deuxième vérin articulé au bras et relié à la bielle au moyen d'un pivot, le bras étant déplaçable par rapport à la bielle par actionnement du deuxième vérin.

Sur une machine de ce type connue du document EP 1 527 669 A1, le bras est porté par le bâti, de manière articulée, au moyen de la première articulation. La bielle est également portée par le bâti, de manière articulée, au moyen d'une articulation dont l'axe de pivotement est, dans une variante de réalisation préférée de cette machine, confondu avec celui de la première articulation. Le déplacement de l'organe de travail de la position de travail vers la position de transport est obtenu par le pivotement du bras autour de la première articulation avec le bâti. Ce pivotement peut se décomposer en deux mouvements. Au cours d'un premier mouvement, opéré par le premier vérin disposé entre le bâti et la bielle, la bielle pivote par rapport au bâti. En pivotant, la bielle entraîne le bras dans un mouvement de pivotement par rapport au bâti, car la bielle et le bras sont reliés par le deuxième vérin qui agit à la manière d'un tirant. Au cours d'un deuxième mouvement, le deuxième vérin, situé entre le bras et la bielle, est actionné de manière à déplacer le bras par rapport à la bielle et donc de manière à déplacer davantage le bras par rapport au bâti. L'actionnement du deuxième vérin n'a pas d'incidence sur la position de la bielle par rapport au bâti, car cette position est déterminée par le premier vérin. Dans ce deuxième mouvement, l'ensemble formé par le bâti, la bielle et le premier vérin forme un triangle articulé rendu rigide par le fait que le premier vérin se comporte à la manière d'un tirant.

Un inconvénient de la machine connue est donc que l'actionnement du deuxième vérin permet de déplacer seulement le bras par rapport à la bielle, mais pas en plus la bielle par rapport au bâti. Par conséquent, au moins un des vérins doit être de longueur importante pour garantir un pivotement suffisant de l'organe de travail entre la position de travail et la position de transport, en particulier lorsque cette dernière est située au-delà de la verticale. Dans un mode de réalisation de la machine connue, le premier vérin est utilisé pour le passage de la position de manoeuvre vers la position de transport, au cours duquel l'angle de pivotement du bras est important, tandis que le deuxième vérin est employé pour le déplacement de la position de travail vers la position de manoeuvre, au cours duquel l'angle de pivotement du bras est faible. Le deuxième vérin est de longueur réduite, ce qui oblige le premier vérin à être de longueur importante. Ceci augmente l'encombrement, la masse et le coût du dispositif de déplacement.

Une deuxième machine de coupe est connue du document NL 1 033 509 C2. Sur cette machine, une bielle s'étendant latéralement par rapport au bâti est portée par celui-ci, de manière articulée, par l'intermédiaire de deux barres superposées formant un parallélogramme articulé. Un premier vérin articulé entre la bielle et le bâti permet de déformer et déplacer ce parallélogramme articulé de sorte à translater verticalement la bielle par rapport au bâti. Cette bielle porte à son tour un bras au moyen d'un axe autour duquel le bras peut pivoter par l'action d'un deuxième vérin articulé entre la bielle et le bras. Ce bras porte un organe de travail. Un inconvénient de cet agencement est que le pivotement de l'organe de travail entre la position de travail et la position de transport est entièrement dévolu au deuxième vérin, le premier vérin ne faisant que translater verticalement l'organe de travail par rapport au bâti. La course et la longueur totales du deuxième vérin sont par conséquent importantes, ce qui en augmente l'encombrement, la masse et le coût. Par ailleurs, la construction faisant appel à un parallélogramme articulé est complexe et onéreuse. Les nombreuses articulations qu'elle comporte sont source de défaillances et de jeux de fonctionnement.

La présente invention a pour but de proposer une machine de coupe qui ne présente pas les inconvénients précités. Elle propose un dispositif de déplacement simple et compact permettant d'alléger la machine et d'en réduire le coût. Ce dispositif de déplacement comporte un nombre réduit d'articulations qui est favorable à la durée de vie de la machine. Il autorise en outre une garde au sol élevée de la machine pour les manoeuvres et au transport, et permet à l'organe de travail d'être relevé à bonne distance du sol pour les manoeuvres et d'être, si nécessaire, pivoté bien au-delà de la verticale pour une hauteur réduite au transport.

A cet effet, une importante caractéristique de l'invention consiste en ce que la bielle est reliée directement au bras par une deuxième articulation, et que la deuxième articulation est distincte de la première articulation. De cette manière, le deuxième vérin, par variation de sa longueur, déplace simultanément le bras, la bielle et le premier vérin par rapport au bâti. Le support d'attelage présente un plan médian et le bras comporte une extrémité distante de la première articulation, laquelle extrémité porte l'organe de travail. De manière avantageuse, le deuxième vérin, par variation de sa longueur, déplace d'une part l'extrémité par rapport au pivot dans une direction relative au plan médian, d'autre part le pivot par rapport au plan médian dans la même direction. On obtient ainsi une réduction de la course que le deuxième vérin doit avoir pour déplacer le bras par rapport au bâti. Dans l'exemple où le deuxième vérin fait pivoter le bras de la position de manoeuvre vers la position de transport, lequel pivotement est de grande amplitude, le deuxième vérin peut conserver une longueur réduite. Le premier vérin employé pour le déplacement du bras, de plus faible amplitude, de la position de travail vers la position de manoeuvre, conserve aussi une longueur réduite.

D'autres caractéristiques et avantages de l'invention ressortiront de la description ci-après avec référence aux dessins annexés qui représentent, à titre d'exemple non limitatif, plusieurs exemples de réalisation du dispositif d'accouplement selon l'invention.

Sur ces dessins :
- la figure 1 représente une vue en perspective d'une première variante de réalisation d'une machine de coupe selon l'invention ;
- la figure 2 représente une vue arrière de la première variante de réalisation, en position de travail ;
- la figure 3 représente une vue arrière de la première variante de réalisation, en position de manoeuvre ;
- la figure 4 représente une vue arrière de la première variante de réalisation, dans une position de transport au-delà de la verticale ;
- la figure 5 représente une vue arrière de la première variante de réalisation, dans une position de transport sensiblement verticale ;
- la figure 6 représente une vue arrière d'une deuxième variante de réalisation, en position de travail ;
- la figure 7 représente schématiquement un circuit de commande du premier vérin.

Dans la description qui suit, les notions « au-dessus », « au-dessous », « inférieure » et « supérieure » sont définies par rapport au sol, et les notions « avant », « arrière », « en aval », « gauche » et « droite » sont définies par rapport à la direction d'avancement (A).

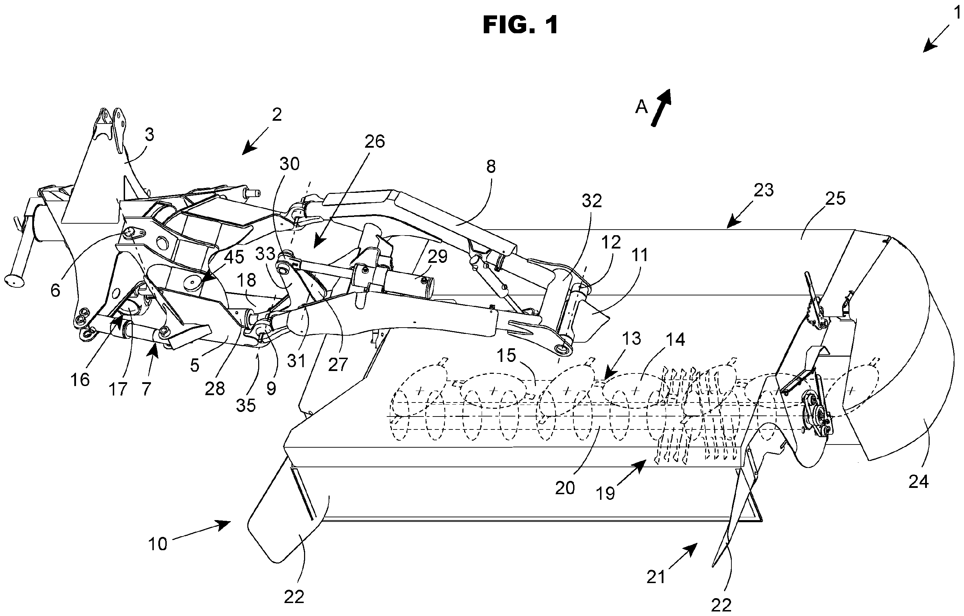

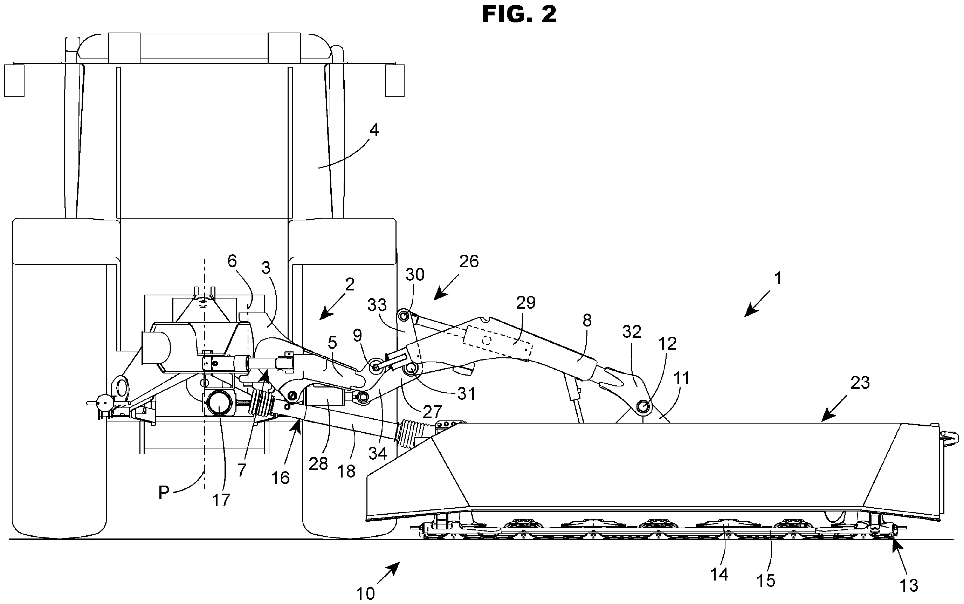

Telle qu'elle est représentée sur la figure 1, la machine (1) de coupe selon l'invention comporte un châssis (2). Le châssis (2) comporte notamment un support d'attelage (3) pouvant être monté sur un attelage trois points d'un tracteur (4) représenté seulement en partie sur la figure 2. Le support d'attelage (3) se présente, par exemple, sous la forme d'une structure mécano-soudée. Il comporte dans sa partie inférieure deux tourillons conçus pour venir s'accrocher aux bras d'attelage inférieurs du tracteur (4). Dans sa partie supérieure, il comporte un ou plusieurs trous pouvant accueillir un axe pour la connexion à une bielle d'attelage supérieure du tracteur (4). Le châssis (2) comporte également un bâti (5). Le bâti (5) peut être lié rigidement ou bien de manière articulée au support d'attelage (3). Sur les figures, le bâti (5) est relié au support d'attelage (3) au moyen d'un axe (6) sensiblement vertical, mais qui pourrait aussi être incliné vers l'avant ou vers l'arrière. En sus, des moyens de retenue (7) du bâti (5) par rapport au support d'attelage (3) sont prévus, ces moyens (7) comprenant notamment un vérin articulé au bâti (5) et au support d'attelage (3) et disposé en arrière dudit axe (6). Au travail, ces moyens de retenue (7) maintiennent le bâti (5) dans une position où il s'étend de manière sensiblement perpendiculaire à la direction d'avancement (A). En cas de rencontre de la machine (1) avec un obstacle, ces moyens de retenue (7) autorisent le bâti (5) à pivoter vers l'arrière de manière limitée et amortie.

La machine (1) comporte un bras (8) relié directement au bâti (5) par une première articulation (9) et s'étendant, au moins pendant le travail, latéralement par rapport au bâti (5). Par « directement », on entend que la liaison entre le bras (8) et le bâti (5) est formée par une articulation du type axe ou rotule. Le bras (8) est porté par le bâti (5), de manière articulée, au moyen de la première articulation (9). Le bras (8) porte un organe de travail (10) d'une manière rigide ou articulée. Le bras (8) est par exemple réalisé en une seule pièce. Il comporte de ce fait pour seules articulations, la première articulation (9) avec le bâti et l'éventuelle articulation avec l'organe de travail (10). Le bras (8) est un ensemble rigide.

L'organe de travail (10) comporte un bâti intermédiaire (11). Dans le cas d'une liaison rigide entre le bras (8) et l'organe de travail (10), le bras (8) peut s'intégrer visuellement à l'enveloppe extérieure de l'organe de travail (10), sans nécessairement être disposé à quelque distance au-dessus de l'organe de travail (10). Dans ce cas, le bras (8) se confond en quelque sorte avec le bâti intermédiaire (11). Alternativement, l'organe de travail (10) peut être articulé au bras (8). Cette liaison articulée peut comporter un ou plusieurs degrés de liberté en rotation. Sur les figures, le bâti intermédiaire (11) est articulé au bras (8) au moyen d'un axe (12) s'étendant dans la direction d'avancement (A).

L'organe de travail (10) comporte des éléments de coupe (13) formés par exemple par des rotors de coupe (14) tels que des disques ou des tambours munis de couteaux qui s'étendent au-delà de la périphérie des rotors (14). Ces derniers sont montés sur des paliers disposés à intervalles plus ou moins réguliers sur une barre de coupe (15) reliée au bâti intermédiaire, et sont, en fonctionnement, portés en rotation rapide au moyen d'un train de pignons incorporés dans un carter étanche contenant un lubrifiant tel que de l'huile. En étant mis en rotation, les couteaux viennent alors sectionner les végétaux s'élevant au-dessus du sol, tels que de l'herbe ou d'autres plantes fourragères. Le carter de la barre de coupe (15) se présente sous la forme d'un parallélépipède allongé. Le train de pignons est actionné par des moyens de transmission (16) aptes à transmettre l'énergie nécessaire depuis le tracteur (4), ces moyens de transmission (16) comprenant notamment un carter de transmission, un carter de renvoi (17) et un ou plusieurs éléments de transmission articulés (18). Sur les figures, le carter de transmission est situé sur le flanc gauche de la barre de coupe (15). Le carter de transmission contient par exemple un ou plusieurs pignons, chaînes ou courroies reliés mécaniquement aux éléments de coupe (13). Le carter de renvoi (17) est situé au-dessous du châssis (2). Il est lié rigidement au châssis (2). Il serait néanmoins envisageable que le carter de renvoi (17) soit articulé au châssis (2) et que ses mouvements soient pilotés par exemple par un levier relié au bâti (5) ou au bras (8). Un premier élément de transmission articulé (18) se présente sous la forme d'un arbre portant à chaque extrémité un cardan relié au carter de renvoi (17) respectivement au carter de transmission. Un deuxième élément de transmission articulé, non visible sur les figures, se présente sous la forme d'un arbre portant à une extrémité un cardan relié au carter de renvoi (17) et à son autre extrémité un moyen de connexion rapide à la prise de force du tracteur (4). Les moyens de transmission (16) pourraient également comporter un moteur hydraulique ou électrique. L'organe de travail (10) peut également comporter des éléments de conditionnement (19) des végétaux fauchés disposés en aval de la barre de coupe (15). Ces éléments de conditionnement (19) sont portés par le bâti intermédiaire (11). Ils comportent par exemple un ou plusieurs rotors de conditionnement (20) portant des doigts ou des fléaux dont une partie seulement est représentée sur la figure 1. Les éléments de conditionnement (19) comportent en sus une tôle et un peigne disposés au-dessus dudit (desdits) rotor(s) et qui coopèrent avec ces doigts ou fléaux. Cette tôle et/ou ce peigne sont éventuellement réglables afin de modifier l'intensité du conditionnement. Les éléments de conditionnement (19) pourraient aussi être formés par des rouleaux comportant sur leur surface un motif en relief, par exemple un motif en chevrons. L'organe de travail (10) peut aussi comporter des éléments d'andainage (21), tels que des tôles à andain (22) ou des tambours d'andainage disposés aux extrémités latérales de la barre de coupe (15) ou des éléments de conditionnement (19). Les éléments d'andainage (21) pourraient aussi être formés par une ou plusieurs vis sans fin ou tapis convoyeurs disposés perpendiculairement à la direction d'avancement (A). Tel que cela est représenté sur la figure 1, le bâti intermédiaire (11) porte des tôles à andains (22) qui permettent de diriger le flux de végétaux fauchés latéralement et vers l'arrière. Les éléments d'andainage (21) pourraient aussi être portés par un support articulé au bâti intermédiaire (11), de manière à pouvoir être déplacés entre une position active et une position inactive. Enfin, l'organe de travail (10) peut comporter un élément de protection (23). Ce denier entoure, au moins partiellement, la barre de coupe (15) et les éventuels éléments de conditionnement (19) et/ou d'andainage (21) décrits précédemment. L'élément de protection (23) comporte par exemple une toile souple (24) qui s'étend verticalement de manière à former les faces avant, gauche et droite de l'élément de protection (23). Cette toile souple (24) est assemblée, sur son pourtour supérieur, à un capot (25) formant la face supérieure de l'élément de protection (23). Ce capot (25) se compose d'une ou plusieurs tôles assemblées entre elles et peut comprendre des portions en matière synthétique. Le capot (25) est lié au bâti intermédiaire (11) et peut comprendre des parties repliables.

Il reste envisageable que le châssis (2) porte une barre de coupe alternative, laquelle comporte deux rangées de doigts coupants disposées l'une au-dessus de l'autre et animées d'un mouvement alternatif l'une par rapport à l'autre. Les éléments de coupe (13) pourraient aussi être formés par un ou plusieurs rotors de broyage disposés verticalement ou horizontalement. De tels rotors de broyage sont munis par exemple de couteaux, fléaux ou marteaux.

Les différentes articulations de la machine (1) peuvent, de manière connue, être formées par des axes et/ou des rotules.

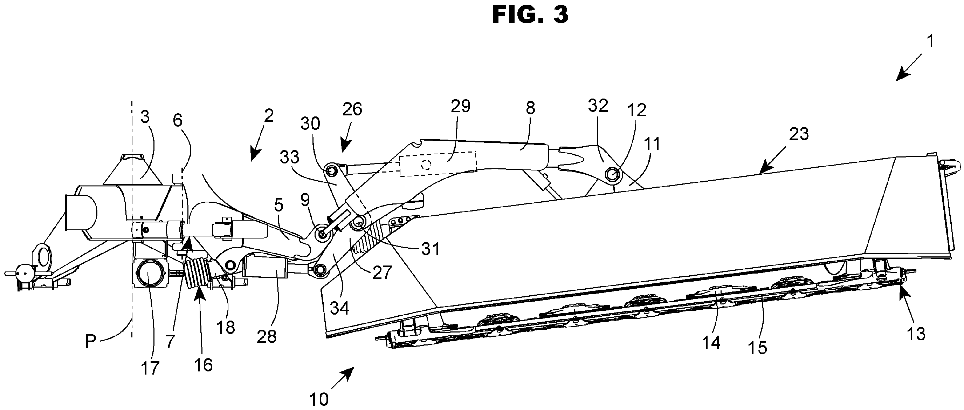

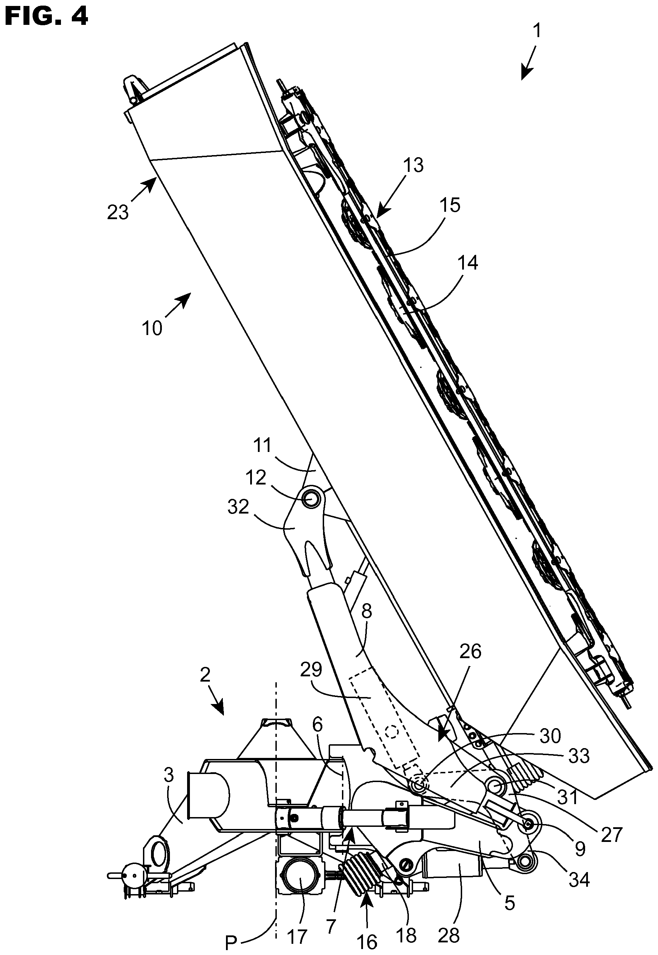

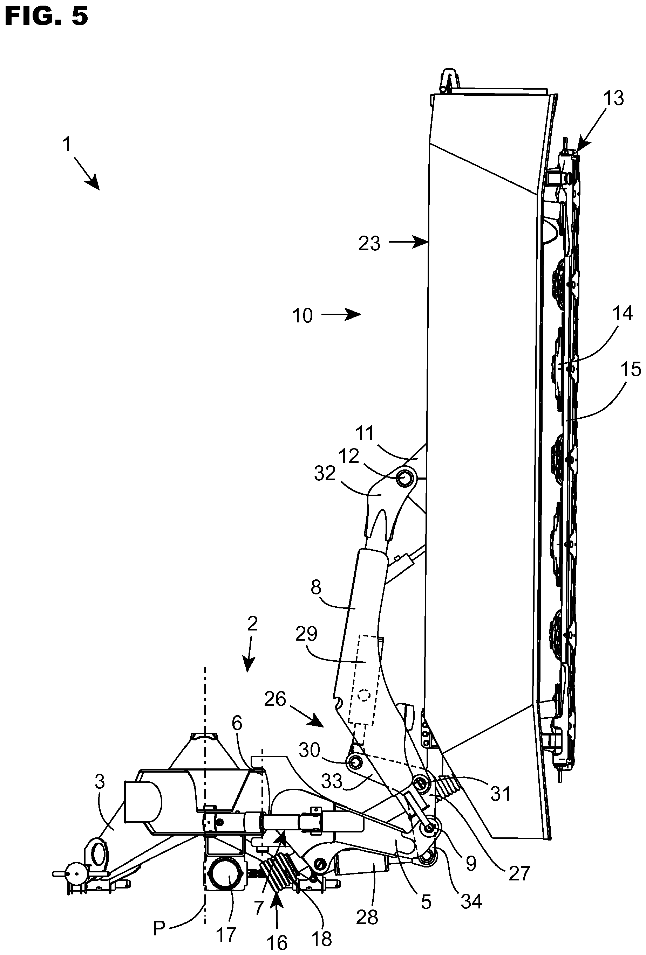

Le bras (8) peut être pivoté par rapport au bâti (5) entre une position de travail, représentée sur la figure 2, dans laquelle l'organe de travail (10) repose au sol, une position de manoeuvre, illustrée à la figure 3, dans laquelle l'organe de travail (10) est relevé à quelque distance du sol pour passer au-dessus d'obstacles ou de végétaux déjà travaillés, et une position de transport, visible par exemple sur la figure 4, dans laquelle l'organe de travail (10) est relevé au maximum pour un transport aisé de la machine (1) sur route ouverte ou d'une parcelle à l'autre. Sur la figure 4, on distingue que l'organe de travail (10) est replié depuis l'horizontale d'un angle supérieur à 90°. Une telle disposition est avantageuse lorsque l'organe de travail (10) présente une largeur de travail importante, car une hauteur au transport inférieure à la limite légale reste possible. Alternativement, tel que cela est représenté sur la figure 5, l'organe de travail (10) peut aussi s'étendre de manière sensiblement verticale dans la position de transport. Une telle disposition peut être préférée lorsque la largeur de travail de l'organe de travail (10) est réduite.

Le bras (8) est pivoté par rapport au bâti (5) entre les positions décrites précédemment au moyen d'un dispositif de déplacement (26). Ce dernier comporte notamment une bielle (27). Ainsi qu'il ressort par exemple de la figure 2, la bielle (27) est un élément distinct du bras (8). Le dispositif de déplacement (26) comporte également au moins un premier vérin (28) articulé entre le bâti (5) et la bielle (27), ainsi qu'un deuxième vérin (29) articulé au bras (8) et relié à la bielle (27) au moyen d'un pivot (30).

Selon une caractéristique importante de l'invention, la bielle (27) est reliée directement au bras (8) par une deuxième articulation (31). Par « directement », on entend que la liaison entre la bielle (27) et le bras (8) est formée par une articulation du type axe ou rotule. La bielle (27) est supportée par le bras (8) au niveau de la deuxième articulation (31). Il en résulte qu'un déplacement du bras (8) autour de la première articulation (9), entraîne avec lui un déplacement de la bielle (27). La deuxième articulation (31) est distincte de la première articulation (9). Cela signifie que les axes ou points de pivotement géométriques respectifs de ces première et deuxième articulations (9 et 31) sont distincts. Notamment, et tel que cela ressort par exemple de la figure 2, deux plans verticaux orientés sensiblement parallèlement à la direction d'avancement (A), et passant, au moins dans la position de travail, chacun par un axe ou point de pivotement géométrique respectif desdites articulations (9 et 31), sont distants l'un de l'autre.

Lorsque le premier vérin (28) est actionné, il déplace la bielle (27) par rapport au bâti (5). Dans son mouvement, la bielle (27) fait pivoter le bras (8) autour de la première articulation (9) avec le bâti (5). Lorsque le deuxième vérin (29) est actionné, il déplace le bras (8) par rapport à la bielle (27). Il se produit en l'occurrence un pivotement relatif du bras (8) et de la bielle (27) autour de la deuxième articulation (31). Etant donné que la bielle (27) prend appui sur le premier vérin (28) et que le bras (8) est porté par le bâti (5) au moyen de la première articulation (9), le deuxième vérin (29) déplace simultanément le bras (8), la bielle (27) et le premier vérin (28) par rapport au bâti (5).

Le support d'attelage (3) présente un plan médian (P). Sur les figures, ce plan médian (P) s'étend de manière sensiblement verticale et parallèle à la direction d'avancement (A). Le bras (8) comporte une extrémité (32) distante de la première articulation (9), laquelle extrémité (32) porte l'organe de travail (10). Dans l'exemple de réalisation des figures, cette extrémité (32) porte l'axe (12) avec l'organe de travail (10). Le dispositif de déplacement (26) est de préférence conçu pour que l'actionnement du deuxième vérin (29) modifie d'une part une première distance entre l'extrémité (32) et le pivot (30), d'une première quantité, d'autre part une deuxième distance entre le pivot (30) et le plan médian (P), d'une deuxième quantité de même signe que la première quantité. La deuxième distance est mesurée perpendiculairement au plan médian (P). Les première et deuxième quantités sont de signe positif ou négatif. Par exemple, lors d'une transposition de l'organe de travail (10) de la position de travail vers la position de transport, l'actionnement du deuxième vérin (29) rapproche l'extrémité (32) du pivot (30) et le pivot (30) du plan médian (P). Dans ce cas, la première respectivement la deuxième distance est réduite d'une première respectivement d'une deuxième quantité, lesquelles quantités sont positives.

La machine (1) selon l'invention prévoit qu'au moins l'un des premier et deuxième vérins (28, 29) déplace l'organe de travail (10) entre la position de travail et la position de manoeuvre. Au moins l'autre des premier et deuxième vérins (28, 29) déplace l'organe de travail (10) entre la position de manoeuvre et la position de transport. Il serait donc envisageable que les déplacements de l'organe de travail (10) entre l'une et l'autre des positions de travail, de manoeuvre et de transport soient obtenus par des déplacements séparés ou combinés des premier et deuxième vérins (28, 29).

Dans les variantes de réalisation des figures, le premier vérin (28) déplace l'organe de travail (10) entre la position de travail et la position de manoeuvre, tandis que le deuxième vérin (29) déplace l'organe de travail (10) entre la position de manoeuvre et la position de transport.

Dans la première variante de réalisation des figures 1 à 5, le premier vérin (28) est un vérin simple effet actionné à l'allongement. Ainsi que représenté sur la figure 4, le deuxième vérin (29) peut être à double effet, notamment lorsque l'organe de travail (10) en position de transport est pivoté au-delà d'une position verticale. Le deuxième vérin (29) actionné au raccourcissement déplace alors l'organe de travail (10) vers la position de transport et, actionné à l'allongement, déplace l'organe de travail (10) depuis la position de transport. Alternativement, ainsi qu'illustré à la figure 5, le deuxième vérin (29) peut être à simple effet, notamment lorsque l'organe de travail (10) en position de transport s'étend sensiblement à la verticale. Le deuxième vérin (29) est alors actionné au raccourcissement.

Dans la première variante de réalisation des figures 1 à 5, l'allongement du premier vérin (28) provoque, en vue arrière de la machine (1), un mouvement de pivotement de la bielle (27) vers le haut et en direction du plan médian (P). Dans le même temps, le deuxième vérin (29) n'est pas actionné et se comporte donc comme un tirant de longueur fixe. Le mouvement de la bielle (27) est donc transmis au bras (8) qui est amené à pivoter autour de la première articulation (9), provoquant le soulèvement de l'organe de travail (10) du sol en direction de sa position de manoeuvre. Cette position est atteinte après que le bras (8) a pivoté d'un angle modéré, le premier vérin (28) peut donc avoir une course et une longueur réduites. Le deuxième vérin (29) est ensuite actionné au raccourcissement. L'extrémité du bras (8) distante de la première articulation (9) se rapproche alors du pivot (30). Dans le même temps, le premier vérin (28) conserve la longueur qu'il a atteinte dans la position de manoeuvre, et agit à la manière d'un tirant rigide. Par réaction de la bielle (27) sur le premier vérin (28), le pivot (30) se rapproche du plan médian (P). Les différents déplacements se poursuivent jusqu'à ce que le deuxième vérin (29) ait atteint une longueur qui correspond à la position de transport de la machine (1). Ainsi, le déplacement du bras (8) de la position de manoeuvre vers la position de transport s'obtient par la combinaison d'un raccourcissement du deuxième vérin (29) et par le rapprochement du pivot (30) - portant le deuxième vérin (29) - en direction de la position que le bras (8) prend en position de transport. Cette caractéristique autorise l'emploi d'un deuxième vérin (29) de course et donc de longueur réduites. Le dispositif de déplacement (26) dans son ensemble est donc peu encombrant, notamment dans une direction perpendiculaire à la direction d'avancement (A). Cette caractéristique permet à l'organe de travail (10) de se rapprocher fortement du bras (8) dans la position de manoeuvre, ainsi qu'il ressort de la figure 3, d'où un dégagement plus important au-dessus du sol. Il apparaît également sur les figures 4 et 5 que le dispositif de déplacement (26) présente un encombrement vertical réduit dans la position de transport. Cette caractéristique autorise d'une part un pivotement important du bras (8) au-delà de la verticale, d'où une hauteur réduite de la machine (1) au transport, d'autre part une garde au sol élevée. On notera ainsi qu'au transport, les vérins (28, 29), le bras (8) et la bielle (27) s'étendent au-dessus du point le plus bas du bâti (5).

Le dispositif de déplacement (26) est de préférence conçu pour qu'au moins dans la position de travail, la première articulation (9) soit disposée entre le plan médian (P) et la deuxième articulation (31). Autrement dit, en vue arrière de la machine (1), la deuxième articulation (31) est située à droite de la première articulation (9). Selon une autre réalisation, non représentée, le bras (8) pourrait comporter une partie s'étendant à gauche de la première articulation (9), et le dispositif de déplacement (26) serait alors conçu pour que ladite partie porte la deuxième articulation (31).

Dans la première variante de réalisation des figures 1 à 5, la bielle (27) est partagée en une portion supérieure (33) située au-dessus de la deuxième articulation (31), laquelle portion supérieure (33) porte le pivot (30), et en une portion inférieure (34) située au-dessous de la deuxième articulation (31), laquelle portion inférieure (34) est articulée au premier vérin (28). Cette disposition permet avantageusement d'utiliser une partie de l'espace disponible au-dessous de la première articulation (9), pour y loger le premier vérin (28), ce qui libère une place conséquente au-dessus de la première articulation (9) pour permettre un pivotement de grande amplitude du bras (8), par exemple au-delà de la verticale.

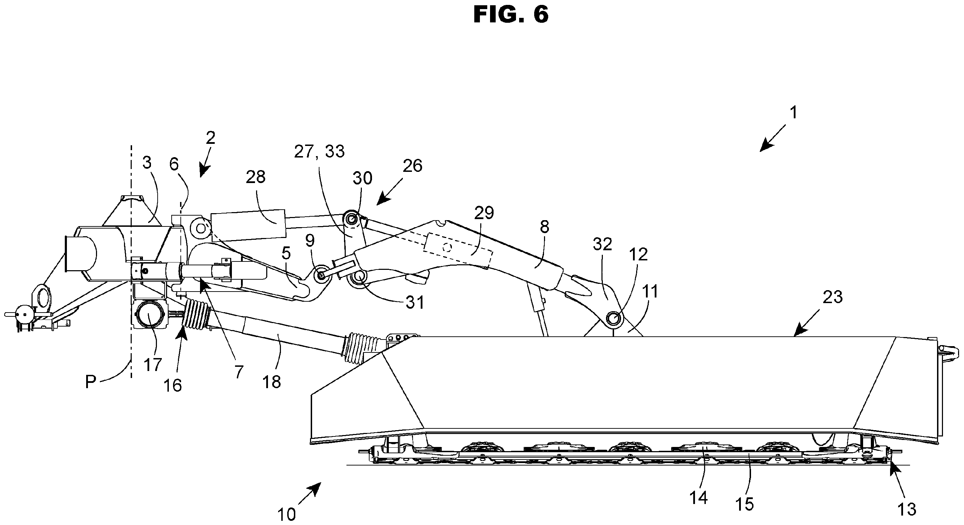

Dans la deuxième variante de réalisation de la figure 6, la bielle (27) comporte une portion supérieure (33) située au-dessus de la deuxième articulation (31), laquelle portion supérieure (33) porte le pivot (30) et est articulée au premier vérin (28). Dans ce cas, le premier vérin (28) s'étend donc, au moins partiellement, au-dessus de la première articulation (9). Cette configuration peut être préférée à la première pour augmenter la garde au sol dans les positions de manoeuvre et/ou de transport, ou encore pour mettre le premier vérin (28) à l'abri des projections de fourrage.

Dans ces deux variantes de réalisation, le deuxième vérin (29) s'étend, au moins partiellement, au-dessus du bras (8). Un espace important au-dessous du bras (8) est donc préservé pour permettre à l'organe de travail (10) de s'en rapprocher fortement dans la position de manoeuvre, en vue d'un dégagement important au-dessus du sol.

De manière avantageuse, dans au moins une des positions de travail et de manoeuvre, le premier vérin (28) et le deuxième vérin (29) se chevauchent. Ceci signifie que, en vue arrière de la machine (1), les deux vérins (28, 29) sont au moins partiellement superposés. Cette caractéristique donne une compacité remarquable du dispositif de déplacement (26) dans une direction perpendiculaire à la direction d'avancement (A).

Sur les figures, la première articulation (9) a un axe de pivotement (35) situé dans un plan vertical parallèle à la direction d'avancement (A) du tracteur (4). Ainsi, dans la position de travail, le bras (8) s'étend de manière sensiblement perpendiculaire à la direction d'avancement (A). Ledit axe de pivotement (35) peut être orienté dans la direction d'avancement (A), auquel cas le bras (8) se déplace dans un plan vertical entre la position de travail et la position de transport. Alternativement, ledit axe de pivotement (35) peut être incliné vers l'avant, de manière à ce qu'en position de transport, le centre de gravité de la machine (1) soit rapproché du tracteur (4). Ledit axe de pivotement (35) peut aussi être incliné vers l'arrière, pour permettre par exemple à un organe de travail (10) de grandes dimensions d'être replié vers le haut sans entrer en collision avec le tracteur (4).

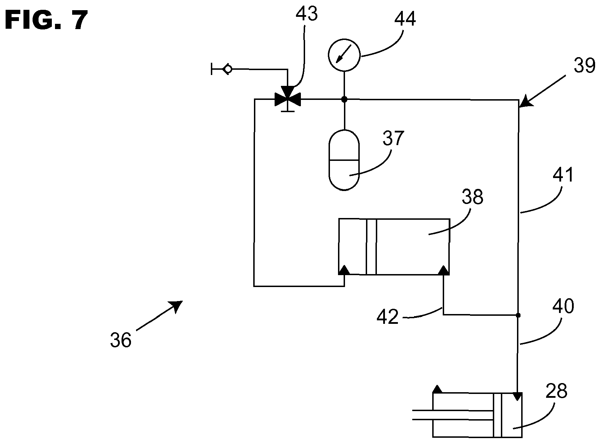

Selon une caractéristique avantageuse de l'invention, un circuit de commande (36) du premier vérin (28) comporte un accumulateur (37) et une pompe de relevage (38). Ainsi, le premier vérin (28) peut réaliser à la fois l'allégement de l'organe de travail (10) et du dispositif de déplacement (26) au travail, et l'amortissement des déplacements de l'organe de travail (10) pendant le travail et autour de la position de manoeuvre. Au travail, l'allégement a pour but de limiter la pression que l'organe de travail (10) exerce sur le sol lorsqu'il se déplace. On évite ainsi que l'organe de travail (10) ne gratte trop le sol ou ne s'y enfonce de trop, ce qui le préserve d'une usure excessive et limite la résistance à l'avancement de la machine (1). L'allégement évite également d'introduire trop d'impuretés - terre, cailloux - dans les végétaux travaillés. L'amortissement évite que l'organe de travail (10) ne rebondisse sur les obstacles pendant le travail. L'amortissement permet également de freiner les déplacements éventuels de l'organe de travail (10) autour de la position de manoeuvre, par exemple lorsque le tracteur (4) évolue sur un terrain accidenté. Tel qu'il est représenté sur la figure 7, le circuit de commande (36) du premier vérin (28) comporte un circuit de fluide (39) reliant le premier vérin (28), l'accumulateur (37) et la pompe de relevage (38) entre eux. L'accumulateur (37) comporte une sphère dont le volume intérieur est séparé en deux chambres par une membrane souple, une chambre contenant un gaz sous pression tel que de l'azote, l'autre chambre contenant de l'huile. La pompe de relevage (38) se présente sous la forme d'un fût dans lequel peut coulisser un piston. Le piston délimite ainsi deux chambres de volume variable. Le circuit (39) comprend un conduit (40) qui se divise en une première branche (41) et en une deuxième branche (42). Le premier vérin (28), de préférence à simple effet, est alimenté en huile par le conduit (40) et la première branche (41) est reliée à un robinet trois voies (43). Cette première branche (41) porte l'accumulateur (37) ainsi qu'un manomètre (44). La deuxième branche (42) est reliée à une chambre de la pompe de relevage (38), l'autre chambre de la pompe de relevage (38) étant reliée au robinet trois voies (43). Le robinet trois voies (43) est relié à un distributeur hydraulique, non représenté, pour l'alimentation en huile depuis le tracteur (4). Pour déplacer l'organe de travail (10), le robinet trois voies (43) est orienté de manière à autoriser l'huile à circuler entre le distributeur et la pompe de relevage (38) uniquement. Une position du distributeur permet alors d'envoyer de l'huile dans la pompe de relevage (38) dont le piston se translate et déplace un volume d'huile déterminé vers le premier vérin (28). Ceci provoque le pivotement vers le haut de l'organe de travail (10). Une autre position du distributeur permet de renvoyer l'huile de la pompe de relevage (38) vers un réservoir, et l'organe de travail (10) s'abaisse sous son propre poids. Le robinet trois voies (43) peut être orienté de manière à autoriser l'huile à circuler entre le distributeur et la première branche (41) uniquement. Par action sur le distributeur, de l'huile peut alors être envoyée dans la première branche (41). En raison de l'orientation du robinet trois voies (43), le piston de la pompe de relevage (38) reste immobile, d'où un accroissement de la pression dans l'accumulateur (37) et dans le premier vérin (28) et donc une augmentation de l'allégement. Le premier vérin (28) voit sa longueur varier par suite des mouvements verticaux de l'organe de travail (10) qui ont lieu pendant le travail et éventuellement autour de la position de manoeuvre. Dans ce cas, le premier vérin (28) déplace un volume de fluide assez faible car sa longueur et sa course sont réduites. L'amortissement peut donc conserver une valeur sensiblement constante avec un accumulateur (37) de taille raisonnable, avantage supplémentaire conféré par la compacité globale du dispositif de déplacement (26) selon l'invention.

Avantageusement, un moyen de butée (45) est prévu sur le châssis (2). Dans les exemples de réalisation des figures, ce moyen de butée (45) est placé sur le bâti (2), mais il pourrait aussi être disposé sur le support d'attelage (3). Dans la position de transport représentée sur les figures 4 et 5, la portion supérieure (33) de la bielle (27) s'appuie sur le moyen de butée (45), par exemple au voisinage du pivot (30). A cette fin, le moyen de butée (45) comprend par exemple un tampon en caoutchouc. Dans la variante de réalisation de la figure 4, qui prévoit une position de transport au-delà de la verticale, le maintien en position de la bielle (27) sur le moyen de butée (45) est assuré par le poids propre du dispositif de déplacement (26) et de l'organe de travail (10). Dans la variante de réalisation de la figure 5, qui prévoit une position de transport sensiblement verticale, il est préférable que le moyen de butée (45) comporte en sus un moyen de verrouillage, non représenté. Celui-ci comprend par exemple un crochet articulé au châssis (2) et venant, dans la position de transport, s'accrocher à un axe solidaire de la bielle (27) ou du bras (8). Néanmoins, l'emploi d'un tel moyen de verrouillage serait aussi envisageable dans la variante de réalisation de la figure 4.

Il est bien évident que l'invention n'est pas limitée aux variantes de réalisation décrites ci-dessus et représentées sur les figures annexées. Des modifications restent possibles, notamment en ce qui concerne la constitution ou le nombre des divers éléments ou par substitution d'équivalents techniques, sans pour autant sortir du domaine de protection, limité par les revendications attachées.

## Revendications

1. Machine (1) de coupe, notamment de végétaux, avec un châssis (2) comportant un bâti (5) et un support d'attelage (3) conçu pour être monté sur un attelage trois points d'un tracteur (4), et avec un bras (8) relié directement au bâti (5) par une première articulation (9) et s'étendant, au moins pendant le travail, latéralement par rapport au bâti (5), le bras (8) portant un organe de travail (10) et pouvant, au moyen d'un dispositif de déplacement (26), être pivoté par rapport au bâti (5) entre une position de travail, une position de manoeuvre et une position de transport, le dispositif de déplacement (26) comportant une bielle (27) et au moins un premier vérin (28) articulé entre le bâti (5) et la bielle (27) et un deuxième vérin (29) articulé au bras (8) et relié à la bielle (27) au moyen d'un pivot (30), le bras (8) étant déplaçable par rapport à la bielle (27) par actionnement du deuxième vérin (29), ***caractérisée en ce que*** la bielle (27) est reliée directement au bras (8) par une deuxième articulation (31), et que la deuxième articulation (31) est distincte de la première articulation (9).

2. Machine de coupe selon la revendication 1, ***caractérisée en ce que*** la bielle (27) est distincte du bras (8).

3. Machine de coupe selon la revendication 1 ou 2, ***caractérisée en ce que*** la bielle (27) est supportée par le bras (8) au niveau la deuxième articulation (31).

4. Machine de coupe selon l'une quelconque des revendications 1 à 3, ***caractérisée en ce que*** le bras (8), la bielle (27) et le premier vérin (28) sont, par rapport au bâti (5), simultanément déplacés par le deuxième vérin (29).

5. Machine de coupe selon la revendication 4, ***caractérisée en ce que*** le support d'attelage (3) présente un plan médian (P), que le bras (8) comporte une extrémité (32) distante de la première articulation (9), laquelle extrémité (32) porte l'organe de travail (10), et que l'actionnement du deuxième vérin (29) modifie d'une part une première distance entre l'extrémité (32) et le pivot (30), d'une première quantité, d'autre part une deuxième distance entre le pivot (30) et le plan médian (P), d'une deuxième quantité de même signe que la première quantité.

6. Machine de coupe selon l'une quelconque des revendications 1 à 5, ***caractérisée en ce qu'***au moins dans la position de travail, la première articulation (9) est disposée entre le plan médian (P) et la deuxième articulation (31).

7. Machine de coupe selon l'une quelconque des revendications 1 à 6, ***caractérisée en ce que*** la bielle (27) est partagée en une portion supérieure (33) située au-dessus de la deuxième articulation (31), laquelle portion supérieure (33) porte le pivot (30), et en une portion inférieure (34) située au-dessous de la deuxième articulation (31), laquelle portion inférieure (34) est articulée au premier vérin (28).

8. Machine de coupe selon l'une quelconque des revendications 1 à 6, ***caractérisée en ce que*** la bielle (27) comporte une portion supérieure (33) située au-dessus de la deuxième articulation (31), laquelle portion supérieure (33) porte le pivot (30) et est articulée au premier vérin (28).

9. Machine de coupe selon la revendication 5 et l'une quelconque des revendications 7 et 8, ***caractérisée en ce que*** le pivot (30) est rapproché du plan médian (P) par le deuxième vérin (29) actionné au raccourcissement.

10. Machine de coupe selon l'une quelconque des revendications 1 à 9, ***caractérisée en ce que*** dans au moins une des positions de travail et de manoeuvre, le premier vérin (28) et le deuxième vérin (29) se chevauchent.

11. Machine de coupe selon l'une quelconque des revendications 1 à 10, ***caractérisée en ce que*** la première articulation (9) a un axe de pivotement (35) situé dans un plan vertical parallèle à une direction d'avancement (A) du tracteur (4).

12. Machine de coupe selon l'une quelconque des revendications 1 à 11, ***caractérisée en ce que*** l'organe de travail (10) est déplacé entre la position de travail et la position de manoeuvre par au moins l'un des premier et deuxième vérins (28, 29).

13. Machine de coupe selon la revendication 12, ***caractérisée en ce que*** l'organe de travail (10) est déplacé entre la position de manoeuvre et la position de transport par au moins l'autre des premier et deuxième vérins (28, 29).

14. Machine de coupe selon la revendication 12, ***caractérisée en ce que*** l'organe de travail (10) est déplacé entre la position de travail et la position de manoeuvre par le premier vérin (28).

15. Machine de coupe selon la revendication 13, ***caractérisée en ce que*** l'organe de travail (10) est déplacé entre la position de manoeuvre et la position de transport par le deuxième vérin (29).

16. Machine de coupe selon la revendication 14, ***caractérisée en ce que*** le premier vérin (28) est un vérin simple effet.

17. Machine de coupe selon la revendication 16, ***caractérisée en ce qu***'un circuit de commande (36) du premier vérin (28) comporte un circuit de fluide (39) reliant le premier vérin (28), un accumulateur (37) et une pompe de relevage (38) entre eux et que la pression dans le circuit de fluide (39) est réglable.

18. Machine de coupe selon la revendication 15, ***caractérisée en ce que*** le dispositif de déplacement (26) est conçu pour que dans la position de transport, l'organe de travail (10) soit sensiblement vertical, et que le deuxième vérin (29) est un vérin simple effet, notamment actionné au raccourcissement.

19. Machine de coupe selon la revendication 15, ***caractérisée en ce que*** le dispositif de déplacement (26) est conçu pour que dans la position de transport, l'organe de travail (10) soit pivoté au-delà d'une position verticale, et que le deuxième vérin (29) est un vérin double effet dont un actionnement au raccourcissement déplace l'organe de travail (10) vers la position de transport et dont un actionnement à l'allongement déplace l'organe de travail (10) depuis la position de transport.

20. Machine de coupe selon l'une quelconque des revendications 1 à 19, ***caractérisée en ce qu***'un moyen de butée (45) est prévu sur le châssis (2), et que dans la position de transport, la portion supérieure (33) de la bielle (27) s'appuie sur le moyen de butée (45).

## Patentansprüche

1. Mähmaschine (1), insbesondere für Pflanzen, mit einem ein Gestell (5) aufweisender Rahmen (2) und einer Kupplungsvorrichtung (3), der geschaffen ist auf eine Dreipunktkupplung eines Schleppers (4) montiert zu werden, und mit einem Arm (8), der direkt mittels eines ersten Gelenks (9) mit dem Gestell (5) verbunden ist und sich mindestens im Betrieb, seitlich bezüglich des Gestells (5) erstreckt, wobei der Arm (8) ein Arbeitselement (10) trägt und mittels einer Verschiebevorrichtung (26) bezüglich des Gestells (5) zwischen einer Arbeitsstellung, einer Betätigungsstellung und einer Transportstellung geschwenkt werden kann, wobei die Verschiebevorrichtung (26) eine Stange (27) und mindestens ein erster Zylinder (28), der zwischen dem Gestell (5) und der Stange (27) angelenkt ist, und ein zweiter Zylinder (29), der an dem Arm (8) angelenkt ist und mit der Stange (27) mittels eines Zapfens (30) verbunden ist, aufweist, wobei der Arm (8) bezüglich der Stange (27) durch Betätigung des zweiten Zylinders (29) verschiebbar ist, ***dadurch gekennzeichnet,* dass** die Stange (27) mittels eines zweiten Gelenks (31) direkt mit dem Arm (8) verbunden ist, und dass das zweite Gelenk (31) von dem ersten Gelenk (9) getrennt ist.

2. Mähmaschine nach Anspruch 1, ***dadurch gekennzeichnet,* dass** die Stange (27) von dem Arm (8) getrennt ist.

3. Mähmaschine nach Anspruch 1 oder 2, ***dadurch gekennzeichnet,* dass** die Stange (27) auf der Höhe des zweiten Gelenks (31) von dem Arm (8) getragen wird.

4. Mähmaschine nach irgend einem der Ansprüche 1 bis 3, ***dadurch gekennzeichnet,* dass** der Arm (8), die Stange (27) und der erste Zylinder (28) bezüglich des Gestells (5) gleichzeitig von dem zweiten Zylinder (29) verschoben werden.

5. Mähmaschine nach Anspruch 4, ***dadurch gekennzeichnet,* dass** die Kupplungsvorrichtung (3) eine Mittelebene (P) aufweist, dass der Arm (8) ein von dem ersten Gelenk (9) entferntes Ende enthält, welches Ende (32) das Arbeitselement (10) trägt, und dass die Betätigung des zweiten Zylinders (29) einerseits einen ersten Abstand zwischen dem Ende (32) und dem Zapfen (30) mit einem ersten Wert und andererseits einen zweiten Abstand zwischen dem Zapfen (30) und der Mittelebene (P) mit einem zweiten Wert mit dem gleichen Zeichen als der erste Wert, verändert.

6. Mähmaschine nach irgend einem der Ansprüche 1 bis 5, ***dadurch gekennzeichnet,* dass** mindestens in der Arbeitsstellung das erste Gelenk (9) zwischen der Mittelebene (P) und dem zweiten Gelenk (31) angebracht ist.

7. Mähmaschine nach irgend einem der Ansprüche 1 bis 6, ***dadurch gekennzeichnet,* dass** die Stange (27) in einen oberen Abschnitt (33), der sich über dem zweiten Gelenk (31) erstreckt, welcher obere Abschnitt (33) den Zapfen (30) trägt, und einen unteren Abschnitt (34), der sich unter dem zweiten Gelenk (31) erstreckt, welcher untere Abschnitt (34) an dem ersten Zylinder (28) angelenkt ist, aufteilt.

8. Mähmaschine nach irgend einem der Ansprüche 1 bis 6, ***dadurch gekennzeichnet,* dass** die Stange (27) einen oberen Abschnitt (33) aufweist, der sich über dem zweiten Gelenk (31) erstreckt, welcher obere Abschnitt (33) den Zapfen (30) trägt und an dem ersten Zylinder (28) angelenkt ist.

9. Mähmaschine nach Anspruch 5 und irgend einem der Ansprüche 7 und 8, ***dadurch gekennzeichnet,* dass** der Zapfen (30) durch die Verkürzung des zweiten Zylinders (29) von der Mittelebene (P) angenähert wird.

10. Mähmaschine nach irgend einem der Ansprüche 1 bis 9, ***dadurch gekennzeichnet,* dass** in mindestens einer der Arbeitsstellung oder Betätigungsstellung, der erste Zylinder (28) und der zweite Zylinder (29) sich überlagern.

11. Mähmaschine nach irgend einem der Ansprüche 1 bis 10, ***dadurch gekennzeichnet,* dass** das erste Gelenk (9) eine Drehachse (35) aufweist, die in einer zu einer Vorschubrichtung (A) des Schleppers (4) parallele Vertikalebene liegt.

12. Mähmaschine nach irgend einem der Ansprüche 1 bis 11, ***dadurch gekennzeichnet,* dass** das Arbeitselement (10) zwischen der Arbeitsstellung und der Betätigungsstellung mittels mindestens einem der ersten und zweiten Zylindern (28, 29) verschoben wird.

13. Mähmaschine nach Anspruch 12, ***dadurch gekennzeichnet,* dass** das Arbeitselement (10) zwischen der Betätigungsstellung und der Transportstellung mittels mindestens dem anderen der ersten und zweiten Zylindern (28, 29) verschoben wird.

14. Mähmaschine nach Anspruch 12, ***dadurch gekennzeichnet,* dass** das Arbeitselement (10) zwischen der Arbeitsstellung und der Betriebsstellung mittels der ersten Zylinders (28) verschoben wird.

15. Mähmaschine nach Anspruch 13, ***dadurch gekennzeichnet,* dass** das Arbeitselement (10) zwischen der Betriebsstellung und der Transportstellung mittels des zweiten Zylinders (29) verschoben wird.

16. Mähmaschine nach Anspruch 14, ***dadurch gekennzeichnet,* dass** der erste Zylinder (28) ein einfach wirkender Zylinder ist.

17. Mähmaschine nach Anspruch 16, ***dadurch gekennzeichnet,* dass** eine Steuerschaltung (36) der ersten Zylinders (28) ein Fluidkreislauf (39) umfasst, der den ersten Zylinder (28), einen Speicher (37) und eine Hubpumpe (38) miteinander verbindet, und dass der Druck in dem Fluidkreislauf (39) einstellbar ist.

18. Mähmaschine nach Anspruch 15, ***dadurch gekennzeichnet,* dass** die Verschiebevorrichtung (26) derart geschaffen ist, dass das Arbeitselement (10) in der Transportstellung im wesentlichen vertical verlauft, und dass der zweite Zylinder (29) ein einfach wirkender Zylinder ist, der insbesondere verkürzt werden kann.

19. Mähmaschine nach Anspruch 15, ***dadurch gekennzeichnet,* dass** die Verschiebevorrichtung (26) derart geschaffen ist, dass das Arbeitselement (10) in der Transportstellung über eine vertikale Stellung hinaus geschwenkt wird, und dass der zweite Zylinder (29) ein doppelwirkender Zylinder ist, dessen Betätigung zur Verkürzung das Arbeitselement (10) in die Transportstellung und dessen Betätigung zur Verlängerung das Arbeitselement (10) aus der Transportstellung bringt.

20. Mähmaschine nach irgend einem der Ansprüche 1 bis 19, ***dadurch gekennzeichnet,* dass** ein Anschlagmittel (45) auf dem Rahmen (2) vorgesehen ist, und dass in der Transportstellung sich der obere Abschnitt (33) der Stange (27) an dem Anschlagmittel (45) abstützt.

## Claims

1. Cutting machine (1), in particular for plants, with a chassis (2) comprising a frame (5) and a coupling support (3) designed to be mounted on a three-point hitch of a tractor (4), and with an arm (8) connected directly to the frame (5) by a first articulation (9) and extending, at least during work, laterally relative to the frame (5), the arm (8) carrying a work element (10) and being able, by means of a displacement device (26), to be pivoted relative to the frame (5) between a work position, a maneuver position and a transport position, the displacement device (26) comprising a connecting-rod (27) and at least a first jack (28) articulated between the frame (5) and the connecting-rod (27) and a second jack (29) articulated to the arm (8) and connected to the connecting-rod (27) by means of a pin (30), the arm (8) being movable relative to the connecting-rod (27) by actuation of the second jack (29), ***characterized in* that** the connecting-rod (27) is directly connected to the arm (8) by a second articulation (31), and that the second articulation (31) is distinct from the first articulation (9).

2. Cutting machine according to claim 1, ***characterized in* that** the connecting-rod (27) is separate from the arm (8).

3. Cutting machine according to claim 1 or 2, ***characterized in* that** the connecting-rod (27) is carried by the arm (8) at the second articulation (31).

4. Cutting machine according to any one of claims 1 to 3, ***characterized in* that** the arm (8), the connecting-rod (27) and the first jack (28) are, relative to the frame (5), simultaneously moved by the second jack (29).

5. Cutting machine according to claim 4, ***characterized in* that** the coupling support (3) has a median plane (P), that the arm (8) comprises an end (32) remote from the first articulation (9), which end (32) carries the work element (10), and that the actuation of the second jack (29) on the one hand modifies a first distance between the end (32) and the pin (30), by a first amount, and on the other hand modifies a second distance between the pin (30) and the median plane (P), by a second amount of the same sign as the first amount.

6. Cutting machine according to any one of claims 1 to 5, ***characterized in* that** at least in the work position, the first articulation (9) is arranged between the median plane (P) and the second articulation (31).

7. Cutting machine according to any one of claims 1 to 6, ***characterized in* that** the connecting-rod (27) is divided into an upper portion (33) situated above the second articulation (31), which upper portion (33) carries the pin (30), and into a lower portion (34) situated below the second articulation (31), which lower portion (34) is articulated to the first jack (28).

8. Cutting machine according to any one of claims 1 to 6, ***characterized in* that** the connecting-rod (27) comprises an upper portion (33) situated above the second articulation (31), which upper portion (33) carries the pin (30), and is articulated to the first jack (28).

9. Cutting machine according to claim 5 and any one of claims 7 and 8, ***characterized in* that** the pin (30) is brought closer to the median plane (P) by the second jack (29) actuated to become shorter.

10. Cutting machine according to any one of claims 1 to 9, ***characterized in* that** in at least one of the work and maneuver positions, the first jack (28) and the second jack (29) overlap.

11. Cutting machine according to any one of claims 1 to 10, ***characterized in* that** the first articulation (9) has a pivoting axis (35) situated in a vertical plane parallel to the direction of advance (A) of the tractor (4).

12. Cutting machine (1) according to any one of claims 1 to 11, ***characterized in* that** the work element (10) is moved between the work position and the maneuver position by at least one of the first and second jacks (28, 29).

13. Cutting machine according to claim 12, ***characterized in* that** the work element (10) is moved between the maneuver position and the transport position by at least one of the first and second jacks (28, 29).

14. Cutting machine according to claim 12, ***characterized in* that** the work element (10) is moved between the work position and the maneuver position by the first jack (28).

15. Cutting machine according to claim 13, ***characterized in* that** the work element (10) is moved between the maneuver position and the transport position by the second jack (29).

16. Cutting machine according to claim 14, ***characterized in* that** the first jack (28) is a single-acting jack.

17. Cutting machine according to claim 16, ***characterized in* that** a control circuit (36) of the first jack (28) comprises a fluid circulation system (39) connecting the first jack (28), an accumulator (37) and a lifting pump (38) to each other and that the pressure in the fluid circulation system (39) is adjustable.

18. Cutting machine according to claim 15, ***characterized in* that** the displacement device (26) is designed so that in the transport position, the work element (10) is substantially vertical, and that the second jack (29) is a single-acting jack, in particular actuated to become shorter.

19. Cutting machine according to claim 15, ***characterized in* that** the displacement device (26) is designed so that in the transport position, the work element (10) is pivoted beyond a vertical position, and that the second jack (29) is a double-acting jack whereof an actuation to become shorter moves the work element (10) toward the transport position and whereof an actuation to become elongated moves the work element (10) from the transport position.

20. Cutting machine according to any one of claims 1 to 19, ***characterized in* that** a stop means (45) is provided on the chassis (2), and that in the transport position, the upper portion (33) of the connecting-rod (27) bears on the stop means (45).
